(19) Europäisches Patentamt / European Patent Office / Office européen des brevets

(11) **EP 4 202 839 B1**

(12) **EUROPEAN PATENT SPECIFICATION**

(45) Date of publication and mention
of the grant of the patent:
**08.10.2025 Bulletin 2025/41**

(21) Application number: **22213116.1**

(22) Date of filing: **13.12.2022**

(51) International Patent Classification (IPC):
***G06T 11/00*** *(2006.01)*

(52) Cooperative Patent Classification (CPC):
**G06T 11/006;** G06T 2211/441; Y02T 10/40

(54) **CT DATA RECONSTRUCTION METHOD AND APPARATUS, ELECTRONIC DEVICE AND COMPUTER-READABLE STORAGE MEDIUM**

CT-DATENREKONSTRUKTIONSVERFAHREN UND -VORRICHTUNG, ELEKTRONISCHE VORRICHTUNG UND COMPUTERLESBARES SPEICHERMEDIUM

PROCÉDÉ ET APPAREIL DE RECONSTRUCTION DE DONNÉES DE TOMODENSITOMÉTRIE, DISPOSITIF ÉLECTRONIQUE ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.12.2021 CN 202111574601**

(43) Date of publication of application:
**28.06.2023 Bulletin 2023/26**

(73) Proprietor: **LargeV Instrument Corp., Ltd.**
**100084 Beijing (CN)**

(72) Inventors:
• **WANG, Zhenchang**
  **Beijing, 100050 (CN)**
• **XING, Yuxiang**
  **Beijing, 100084 (CN)**
• **ZHNAG, Li**
  **Beijing, 100084 (CN)**
• **YIN, Hongxia**
  **Beijing, 100050 (CN)**
• **CHEN, Zhiqiang**
  **Beijing, 100084 (CN)**
• **LI, Yuanjing**
  **Beijing, 100084 (CN)**

• **LI, Jianmin**
  **Beijing, 100084 (CN)**
• **ZHAO, Pengfei**
  **Beijing, 100050 (CN)**
• **LV, Han**
  **Beijing, 100050 (CN)**
• **ZHANG, Zhengyu**
  **Beijing, 100050 (CN)**
• **LI, Jing**
  **Beijing, 100050 (CN)**

(74) Representative: **Renaudo, Adrien Hanouar**
**Patendibüroo Käosaar OÜ**
**Tähe 94**
**50107 Tartu (EE)**

(56) References cited:
**US-A1- 2021 007 694**

• **LI MENGZHOU ET AL: "High-resolution interior tomography with a deep neural network trained on a low-resolution dataset", PROCEEDINGS OF THE SPIE, SPIE, US, vol. 11840, 9 September 2021 (2021-09-09), pages 1184018 - 1184018, XP060149853, ISSN: 0277-786X, ISBN: 978-1-5106-5738-0, DOI: 10.1117/12.2594286**

**Description**

## TECHNICAL FIELD

The present disclosure relates to the technical field of medical devices, in particular to a computerized tomography (CT) reconstruction method and apparatus, an electronic device and a computer-readable storage medium.

## BACKGROUND

In the medical field, CT has been widely used as a basic inspection method. However, at present, limited by its spatial resolution, CT cannot meet a diagnostic requirement in terms of imaging of a body with fine structures such as the temporal bone, so doctors are unable to use CT as an inspection method when diagnosing minimal hidden lesions, thus affecting the efficacy of CT in clinical application.

After CT scanning data is obtained, a CT image that can be directly read by doctors or patients can be obtained by CT reconstruction. However, a traditional CT reconstruction method has a high requirement for data during reconstruction using CT scanning data, and incomplete data will often cause artifacts, which severely affects the usage of the CT images.

Prior art document D1 (US2021/007694 A1) generally discloses an apparatus and a method combining deep learning (dl) with an x-ray computed tomography (ct) scanner having a multi-resolution detector, and specifically discloses that the method and apparatus is provided that uses a deep learning (DL) network together with a multi-resolution detector to perform X-ray projection imaging to provide improved resolution similar to a single-resolution detector but at lower cost and less demand on the communication bandwidth between the rotating and stationary parts of an X-ray gantry; the DL network is trained using a training dataset that includes input data and target data; the input data includes projection data acquired using a multi-resolution detector, and the target data includes projection data acquired using a single-resolution, high-resolution detector (see ABSTRACT of D1).

## SUMMARY

Embodiments of the present disclosure provide a CT reconstruction method and apparatus, an electronic device and a computer-readable storage medium, so as to solve the problems of poor image quality of a CT reconstruction and low efficiency in the prior art.

In order to achieve the above objective, the embodiments of the present disclosure provide a CT reconstruction method, according to claim 1.

The embodiments of the present disclosure also provide a CT reconstruction apparatus, according to claim 8.

The embodiments of the present disclosure also provide an electronic device, including:

a memory configured for storing a program; and
a processor configured for running the program stored in the memory, the program, when run, implementing the CT reconstruction method provided by the embodiments of the present disclosure.

The embodiments of the present disclosure also provide a computer-readable storage medium, which stores a computer program that can be executed by a processor. The program, when executed by the processor, implements the CT reconstruction method provided by the embodiments of the present disclosure.

According to the CT reconstruction method and apparatus, the electronic device and the computer-readable storage medium, by means of acquiring detailed-view scanning data and full-view scanning data and performing ROI projection estimation on the detailed-view scanning data, high-resolution image estimation of a ROI is obtained; reconstruction is performed on the full-view projection data to obtain second image estimation; high-resolution image of the ROI is determined using an image optimization mode according to the first image estimation and the first full-view image estimation, so that a data integrity characteristic of full-view scanning and a high resolution characteristic of detailed-view scanning can be combined to reconstruct a CT image, which not only improves the quality of a reconstructed CT image, but also greatly improves the reconstruction efficiency.

The foregoing description is only a summary of the technical solutions of the present disclosure. To know the technical measures of the present disclosure more clearly, the technical solutions can be implemented in accordance with the content of the specification, and to make the foregoing and other objectives, features and advantages of the present disclosure more understandable, specific implementation modes of the present disclosure are exemplified below.

## BRIEF DESCRIPTION OF THE DRAWINGS

By reading the detailed description in the preferred specific implementation modes below, various other advantages and benefits will become clear to those of ordinary skill in the art. The accompanying drawings are only used for the purpose of illustrating the preferred implementation modes, and are not considered as a limitation to the present disclosure. Furthermore, throughout the drawings, the same reference numerals are used to denote the same components. In the drawings:

FIG. 1 is a schematic diagram of an application scenario of a CT scanning solution of an embodiment of the present disclosure;
FIG. 2 is a flow chart of one embodiment of a CT scanning method provided by the present disclosure;
FIG. 3 is a schematic diagram of one embodiment of a CT scanning apparatus provided by the present disclosure; and
FIG. 4 is a schematic diagram of an electronic device embodiment provided by the present disclosure.

## DETAILED DESCRIPTION OF EXAMPLE EMBODIMENTS

Exemplary embodiments of the present disclosure will be described in more detail below with reference to the accompanying drawings. Although exemplary embodiments of the present disclosure are shown in the drawings, it should be understood that the present disclosure can be implemented in various forms and should not be limited by the embodiments set forth herein. On the contrary, these embodiments are provided to enable a more thorough understanding of the present disclosure and to fully deliver the scope of the present disclosure to those skilled in the art.

Embodiment I

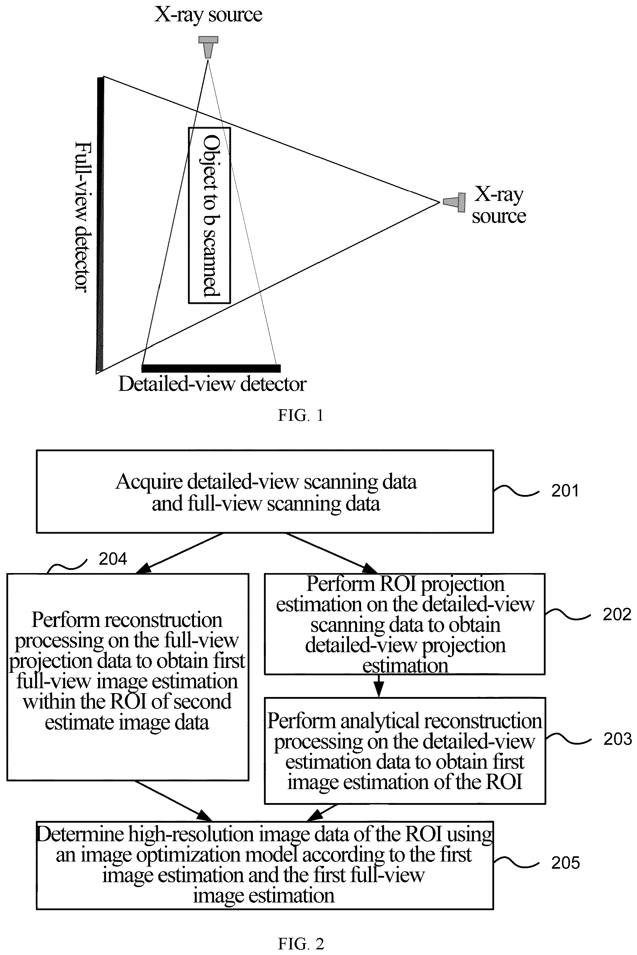

Solutions provided in the embodiments of the present disclosure can be applied to any system with a CT scanning capability, such as a CT scanning system. FIG. 1 is a schematic diagram of an application scenario of a CT scanning solution provided in an embodiment of the present disclosure. The scenario shown in FIG. 1 is one of examples of scenarios that the technical solutions of the present disclosure can be applied to.
In the medical field, CT has been widely used as a basic inspection method. However, at present, limited by its spatial resolution, CT cannot meet a diagnostic requirement in terms of imaging of a body with fine structures such as the temporal bone, so doctors are unable to use CT as an inspection method when diagnosing minimal hidden lesions, thus affecting the efficacy of CT in clinical application.
After CT scanning data is obtained, a CT image that can be directly read by doctors or patients can be obtained by CT reconstruction. However, the traditional CT reconstruction method has a high requirement for data during reconstruction using CT scanning data, and incomplete data will often cause artifacts, which severely affects the use effect of the CT scanning data.
For example, in the scenario as shown in FIG. 1, when a temporal bone region of a object to be scanned in FIG. 1 needs to be scanned for imaging, reconstruction is usually performed using an analytical reconstruction algorithm on the basis of projection obtained from scanning data. The analytical reconstruction algorithm usually has a high requirement for data. If data obtained by scanning has low quality, it will cause artifacts or deformation in a reconstructed image. Particularly, this has a serious impact during scanning of a region with fine structures, such as the temporal bone, and even causes the resulted image unusable for diagnosis. As a result, a patient needs to be scanned again, so that the patient will undergo additional radiation exposure.
In the solution provided in the embodiments of the present disclosure, data fusion processing can be performed on the basis of full-view scanning data obtained by a full-view scanning method and detailed-view scanning data. The full-view scanning data is usually based on a low resolution, but its scanning range is wider, so that a complete scanning result can be obtained. The detailed-view data is usually based on a high resolution, but its scanning range is focused, so that a scanning result with a higher resolution can be obtained. Therefore, a data integrity characteristic of full-view scanning and a high resolution characteristic of detailed-view scanning can be combined to reconstruct a CT image, which not only improves the quality of a reconstructed CT image, but also greatly improves the reconstruction efficiency.
For example, in the embodiments of the present disclosure, ROI can be used to express a targeted region, that is, a region of an object to be scanned. In the embodiments of the present disclosure, a high-resolution detector can be used to perform centralized scanning on the ROI. In the embodiments of the present disclosure, a normal-resolution detector can also be used as a full-view detector for larger-range scanning. Therefore, for example, in the scenario as shown in FIG. 1, a scanning beam formed by the normal-resolution detector and an X-ray source and a scanning beam formed by the high-resolution detector respectively achieve full-view scanning and detailed-view scanning. The above method extends in an axial dimension (perpendicular to a two-dimensional plane in the figure) to form a three-dimensional image.
On the basis of the full-view scanning data and the detailed-view scanning data obtained in this way, in the embodiments of the present disclosure, general data preprocessing can be first performed on the detailed-view scanning data, such as background removal, air removal and negative logarithm operation, to obtain projection data which is recorded as $\mathbf{p}^{HR\text{-}ROI}$ and can be expressed as:

$$\mathbf{p}^{\text{HR-ROI}} = \mathbf{H}^{\text{HR-ROI}}(\boldsymbol{\mu}^{\text{ROI}} + \boldsymbol{\mu}^{\overline{\text{ROI}}}) + \mathbf{n}^{\text{HR}}$$

where $\boldsymbol{\mu}^{\text{ROI}}$ represents a linear attenuation coefficient distribution inside the ROI; $\mu^{\overline{\text{ROI}}}$ represents a linear attenuation coefficient distribution of the normal resolution outside the ROI; $\mathbf{H}^{\text{HR-ROI}}$ represents a system matrix of detailed-view scanning; and $\mathbf{n}^{\text{HR}}$ represents random noise. Estimation data of $\mathbf{H}^{\text{HR-ROI}}\boldsymbol{\mu}^{\text{ROI}}$ can be obtained on the basis of input $\mathbf{p}^{\text{HR-ROI}}$ through a ROI projection estimation network model.

$\hat{\mathbf{g}}^{\text{HR-ROI}} \equiv \varphi_1(\mathbf{p}^{\text{HR-ROI}})$, where $\varphi_1(g)$ is used for denoting an operator represented by a neural network to be optimized; $\hat{\mathbf{g}}^{\text{HR-ROI}}$ is an output of the network; and $\mathbf{p}^{\text{HR-ROI}}$ is projection data obtained by performing the general data preprocessing on the detailed-view scanning data, such as background removal, air removal and negative logarithm operation.

Later, reconstruction operation, i.e., $\hat{\boldsymbol{\mu}}^{\text{ROI}} = \left[\mathbf{H}^{\text{HR-ROI}}\right]_w^T \mathbf{F}\mathbf{w}\hat{\mathbf{g}}^{\text{HR-ROI}}$, can be performed on the projection data $\hat{\mathbf{g}}^{\text{HR-ROI}}$ of the targeted ROI, where $\mathbf{w}$ is weighting in a filtered back projection algorithm under fan-beam or cone-beam scanning; $\mathbf{F}$ is filtering; and $\left[\mathbf{H}^{\text{HR-ROI}}\right]_w^T$ represents a weighting back-projection process under fan-beam or cone-beam scanning.

Therefore, the projection data $\mathbf{g}^a = \mathbf{H}^{\text{HR-ROI}}\hat{\boldsymbol{\mu}}^{\text{ROI}}$ of the target ROI can be obtained. Next, conventional data preprocessing can be similarly performed on the full-view scanning data, such as background removal, air removal and negative logarithm operation, thus obtaining projection data which is recorded as $\mathbf{p}^{\text{NR}}$ and can be expressed as:

$$\mathbf{p}^{\text{NR}} = \mathbf{H}^{\text{NR}}(\boldsymbol{\mu}^{\text{NR}}) + \mathbf{n}^{\text{NR}} = \mathbf{H}^{\text{NR}}(\boldsymbol{\mu}^{\text{NR-ROI}} + \boldsymbol{\mu}^{\text{NR-}\overline{\text{ROI}}}) + \mathbf{n}^{\text{NR}}$$

where $\mathbf{H}^{\text{NR}}$ is a system matrix of full-view scanning; $\mathbf{n}^{\text{NR}}$ is random noise; $\boldsymbol{\mu}^{\text{NR}}$ is a linear attenuation coefficient distribution of the normal resolution, which can be divided into two parts: $\boldsymbol{\mu}^{\text{NR-ROI}}$ is a linear attenuation coefficient distribution of the normal resolution of the ROI, and $\boldsymbol{\mu}^{\text{NR-}\overline{\text{ROI}}}$ is a linear attenuation coefficient distribution of the normal resolution outside the ROI. Therefore, in the embodiments of the present disclosure, the $\boldsymbol{\mu}^{\text{NR}}$ can be reconstructed using a common reconstruction method in the art, so that an estimation image $\hat{\boldsymbol{\mu}}^{\text{NR}}$ can be obtained, and $\hat{\boldsymbol{\mu}}^{\text{NR-ROI}}$ and $\hat{\boldsymbol{\mu}}^{\text{NR-}\overline{\text{ROI}}}$ are correspondingly obtained. This step can be carried out using a well-known iterative method in the art or can be carried out through an analytical reconstruction algorithm. For example, when the analytical reconstruction method is used, high-resolution projection data of pixels outside the ROI can be calculated: $\mathbf{g}^b = \mathbf{H}^{\text{HR-}\overline{\text{ROI}}}\hat{\boldsymbol{\mu}}^{\overline{\text{ROI}}}$, where $\mathbf{H}^{\text{HR-}\overline{\text{ROI}}}$ is a system matrix corresponding to the high-resolution detector and normal resolution pixels outside the ROI.

Finally, first image estimation $\hat{\boldsymbol{\mu}}^{\text{ROI}}$ of the ROI and first full-view image estimation $\boldsymbol{\mu}^{\text{NR-ROI}}$ within the ROI can be input into an image generation model to obtain a high-quality high-resolution image $\hat{\boldsymbol{\mu}}^{\text{HR-ROI}}$ of the ROI.

In addition, pixel-by-pixel summation can be performed on first high-resolution projection data $\mathbf{g}^a$ inside the ROI and second high-resolution projection data $\mathbf{g}^b$ outside the ROI which are obtained in this way to obtain third high-resolution projection data $\hat{\mathbf{p}} = \mathbf{g}^a + \mathbf{g}^b$ of the ROI. Later, cost function 1 can be defined as a distance between $\hat{\mathbf{p}}$ and $\mathbf{p}^{\text{HR-ROI}}$: $\Phi_1(\hat{\mathbf{p}}, \mathbf{p}^{\text{HR-ROI}})$ and cost function 2 can be defined as a distance between $\hat{\boldsymbol{\mu}}^{\text{ROI}}$ and $\tilde{\boldsymbol{\mu}}^{\text{ROI}}$: $\Phi_2\{\hat{\boldsymbol{\mu}}^{\text{ROI}}, \tilde{\boldsymbol{\mu}}^{\text{ROI}}\}$. Therefore, a ROI projection estimation network can be trained using cost function 1 and cost function 2 which are obtained in this way. For example, training can be achieved by minimizing

$$\Phi_1\left(\hat{\tilde{\boldsymbol{\mu}}}^{\text{ROI}}, \tilde{\boldsymbol{\mu}}^{\text{ROI}}\right) + \lambda\Phi_2\left(\hat{p}, p^{\text{HR-ROI}}\right)$$

.

In addition, in the embodiments of the present disclosure, after the high-quality high-resolution image of the ROI is obtained, cost function 3 can also be defined as a distance between $\hat{\boldsymbol{\mu}}^{\text{HR-ROI}}$ and $\tilde{\boldsymbol{\mu}}^{\text{ROI}}$: $\Phi_3(\hat{\boldsymbol{\mu}}^{\text{HR-ROI}}, \tilde{\boldsymbol{\mu}}^{\text{ROI}})$. Therefore, the image optimization model can also be trained using cost function 3. For example, similar to cost functions 1 and 2, the above training can also be performed by minimizing cost function 3.

In addition, in order to acquire a training data set for training, in the embodiments of the present disclosure, training data can also be obtained on the basis of a projection simulation process of detailed-view and full-view scanning modes. For example, high-resolution estimation training data $\boldsymbol{\mu}_{\text{train}}^{\text{HR-ROI}}$ of the ROI can be obtained by scanning a preset model body or human body and using the conventional reconstruction method. The subscript "train" represents data used for training. Of course, in the embodiments of the present disclosure, the high-resolution image training data can also be obtained by a digital model body. Similarly, full-view estimation training data $\mu_{train}^{NR}$ with a normal resolution can be obtained by scanning a preset model body or human body and using a conventional reconstruction method, or the data can be obtained from a published data source. In addition, for example, projection data used in the training data in the embodiments of the present disclosure can be obtained by performing data augmentation processing, such as gray-scale transformation, rotation, transposition and affine transformation, on a high-resolution image and a normal-resolution image of the ROI. Furthermore, data [ $p_{train}^{HR\text{-}ROI}$, $p_{train}^{NR}$ and $\mu_{train}^{HR\text{-}ROI}$ ] is finally formed by pairing to form a training data set. In the embodiments of the present disclosure, the full-view estimation training data and the detailed-view estimation training data can respectively include projection data and image data. The ROI projection estimation network can be trained using the training data obtained in this way. In an actual CT scanning process, the projection data $p^{HR\text{-}ROI}$ obtained by detailed-view scanning and the projection data $p^{NR}$ obtained by full-view scanning can be used as inputs for the above-mentioned CT reconstruction method, thus obtaining $\hat{\mu}^{HR\text{-}ROI}$ serving as the detailed-view image estimation. Furthermore, $\hat{\mu}^{NR}$ can be used as the full-view image estimation, or $\hat{\mu}^{NR}$ can be used as an output after being further denoised using a conventional denoising method in the art.

When the temporal bone is subjected to cone-beam CT scanning, a doctor usually needs to clear fine structures of the temporal bone, so that this region should be scanned and imaged at an ultra-high resolution. Therefore, the temporal bone region can be used as the ROI of the embodiments of the present disclosure. Therefore, the high-resolution detailed-view projection $p_{ROI}^{HR}$ is obtained, and $\hat{g}^{HR\text{-}ROI}$ can be obtained by a 3D U-Net network, a network parameter of which is $\theta^{Net1}$. Input dimensions N, M and L of the network can respectively represent a length and a width of a detector and the number of angles.

Therefore, first-step reconstruction operation, i.e., $\hat{\mu}^{ROI} = \left[ H^{HR\text{-}ROI} \right]_{w}^{T} F w \hat{g}^{HR\text{-}ROI}$, can be performed on $\hat{g}^{HR\text{-}ROI}$, where $w$ is weighting in an FDK algorithm under cone-beam scanning; $F$ is RL filtering; and $\left[ H^{HR\text{-}ROI} \right]_{w}^{T}$ is a weighting back projection process under cone-beam scanning such as the FDK algorithm. Later, the high-resolution projection data of the ROI can be calculated: $g^a = H^{HR\text{-}ROI}\hat{\mu}^{ROI}$. Conventional data preprocessing can be performed on the full-view scanning data, such as background removal, air removal and negative logarithm operation, thus obtaining projection data $p^{NR}$. The FDK algorithm is used to perform reconstruction processing on $p^{NR}$ to obtain image estimation $\hat{\mu}^{NR}$ which can include two parts: estimation data $\hat{\mu}^{NR\text{-}ROI}$ inside the ROI and estimation data $\hat{\mu}^{NR\text{-}\overline{ROI}}$ outside the ROI. Next, high-resolution projection data outside the ROI can be calculated: $g^b = H^{HR\text{-}\overline{ROI}}\hat{\mu}^{\overline{ROI}}$, where $H^{HR\text{-}ROI}$ is a system matrix corresponding to the high-resolution detector and normal resolution pixels outside the ROI.

Finally, the first full-view image estimation $\mu^{NR\text{-}ROI}$ within the ROI can be interpolated till it has the same resolution as that of the first image estimation $\hat{\mu}^{ROI}$ of the ROI; and the first image estimation $\hat{\mu}^{ROI}$ of the ROI and the first full-view image estimation $\mu^{NR\text{-}ROI}$ within the ROI can be input into the image optimization model to obtain high-quality high-resolution image $\hat{\mu}^{HR\text{-}ROI}$ of the ROI.

In addition, pixel-by-pixel summation can be performed on first high-resolution projection data $g^a$ inside the ROI and second high-resolution projection data $g^b$ outside the ROI which are obtained in this way to obtain third high-resolution projection data $\hat{p} = g^a + g^b$ of the ROI. Later, cost function 1 can be defined as a norm distance between $\hat{p}$ and $p^{HR\text{-}ROI}$ : $\Phi_1(\hat{p}, p^{HR\text{-}ROI}) = \|\hat{p} - p^{HR\text{-}ROI}\|$, and cost function 2 can be defined as a norm distance between $\hat{\mu}^{ROI}$ and $\tilde{\mu}^{ROI}$ : $\Phi_2(\hat{\mu}^{ROI}, \tilde{\mu}^{ROI}) = \|\hat{\mu}^{ROI} - \tilde{\mu}^{ROI}\|$. $\tilde{\mu}^{ROI}$ is a ROI true value in simulation. In the embodiments of the present disclosure, the norm distance can be used to express a distance between vectors, and may include 1-norm, namely a sum of absolute values of all elements of the vectors, which is also referred to as the Manhattan distance. The norm distance can also include 2-norm, namely 1/2 exponentiation of the sum of squares of all elements of the vectors, which is also referred to as the Euclidean distance.

Therefore, a ROI projection estimation network can be trained using cost function 1 and cost function 2 which are obtained in this way. For example, training can be achieved by minimizing $\Phi_1(\hat{\mu}^{ROI}, \tilde{\mu}^{ROI}) + \lambda\Phi_2(\hat{p}, p^{HR\text{-}ROI})$.

In addition, in the embodiments of the present disclosure, after the high-quality high-resolution image of the ROI is obtained, cost function 3 can also be defined as a norm distance between $\hat{\mu}^{HR\text{-}ROI}$ and $\tilde{\mu}^{ROI}$ :

$$\Phi_3\left(\widehat{\mu}^{HR\text{-}ROI}, \widetilde{\mu}^{ROI}\right) = \left\|\widehat{\mu}^{HR\text{-}ROI} - \widetilde{\mu}^{ROI}\right\| + \beta\left\|E\left(\widehat{\mu}^{HR\text{-}ROI}\right) - E(\widetilde{\mu}^{ROI})\right\|_2$$

where $\|E(\hat{\mu}^{HR\text{-}ROI}) - E(\tilde{\mu}^{ROI})\|_2$ is CT image feature space, CTIS, loss cost function. Therefore, the image optimization model can also be trained using cost function 3. For example, similar to cost functions 1 and 2, the above training can also be performed by minimizing cost function 3.

Therefore, according to the CT reconstruction solution provided in the embodiments of the present disclosure, by means of acquiring detailed-view scanning data and full-view scanning data and performing ROI projection estimation on the detailed-view scanning data, high-resolution image estimation of a ROI is obtained; reconstruction processing is performed on the full-view projection data to obtain second image estimation; high-resolution image data of the ROI is determined using an image optimization model according to the first image estimation and the first full-view image estimation, so that a data integrity characteristic of full-view scanning and a high resolution characteristic of detailed-view scanning can be combined to reconstruct a CT image, which not only improves the quality of a reconstructed CT image, but also greatly improves the reconstruction efficiency.

The above embodiment is illustrative of the technical principle and exemplary application framework of the embodiments of the present disclosure. Specific technical solutions of the embodiments of the present disclosure are further described in detail below through multiple embodiments.

Embodiment II

FIG. 2 is a flow chart of one embodiment of a CT data reconstruction method provided by the present disclosure. As shown in FIG. 2, the CT data reconstruction method may include the following steps:

In S201, detailed-view scanning data and full-view scanning data are acquired.

Detailed-view scanning data and full-view scanning data can be respectively acquired in the step S201. For example, in the embodiments of the present disclosure, a high-resolution detector can be used to perform centralized scanning on a ROI. In the embodiments of the present disclosure, a normal-resolution detector can also be used as a full-view detector for larger-range scanning. Therefore, for example, in the scenario as shown in FIG. 1, a scanning beam formed by the normal detector and an X-ray source and a scanning beam formed by the high-resolution detector respectively achieve full-view scanning and detailed-view scanning. The above method extends in an axial dimension (perpendicular to a two-dimensional plane in the figure) to form a three-dimensional image.

The full-view scanning data is usually based on a low resolution, but its scanning range is wider, so that a more complete scanning result can be obtained. The detailed-view scanning data is usually based on a high resolution, but its scanning range is focused, so that a scanning result with a higher resolution can be obtained. Therefore, a data integrity characteristic of full-view scanning and a high resolution characteristic of detailed-view scanning can be combined to reconstruct a CT image, which not only improves the quality of a reconstructed CT image, but also greatly improves the reconstruction efficiency.

In addition, prior to the step S201, full-view scanning data, and detailed-view scanning data of the ROI can be firstly acquired; general data preprocessing can be then performed on the detailed-view scanning data, such as background removal, air removal and negative logarithm operation, to obtain projection data which is recorded as $\mathbf{p}^{\text{HR-ROI}}$ and can be expressed as:

$$\mathbf{p}^{\text{HR-ROI}} = \mathbf{H}^{\text{HR-ROI}}(\boldsymbol{\mu}^{\text{ROI}} + \boldsymbol{\mu}^{\overline{\text{ROI}}}) + \mathbf{n}^{\text{HR}}$$

where $\boldsymbol{\mu}^{\text{ROI}}$ represents a linear attenuation coefficient distribution inside the ROI; $\mu^{\overline{\text{ROI}}}$ represents a linear attenuation coefficient distribution of the normal resolution outside the ROI; $\mathbf{H}^{\text{HR-ROI}}$ represents a system matrix of detailed-view scanning; and

$\mathbf{n}^{\text{HR}}$ represents random noise.

Conventional data preprocessing is similarly performed on the full-view scanning data, such as background removal, air removal and negative logarithm operation, thus obtaining projection data which is recorded as $\mathbf{p}^{\text{NR}}$ and can be expressed as:

$$\mathbf{p}^{\text{NR}} = \mathbf{H}^{\text{NR}}(\boldsymbol{\mu}^{\text{NR}}) + \mathbf{n}^{\text{NR}} = \mathbf{H}^{\text{NR}}(\boldsymbol{\mu}^{\text{NR-ROI}} + \boldsymbol{\mu}^{\text{NR-}\overline{\text{ROI}}}) + \mathbf{n}^{\text{NR}}$$

where $\mathbf{H}^{\text{NR}}$ is a system matrix of full-view scanning; $\mathbf{n}^{\text{NR}}$ is random noise; $\boldsymbol{\mu}^{\text{NR}}$ is a linear attenuation coefficient distribution of the normal resolution, which can be divided into two parts: $\boldsymbol{\mu}^{\text{NR-ROI}}$ is a linear attenuation coefficient distribution of the normal resolution of the ROI, and $\boldsymbol{\mu}^{\text{NR-}\overline{\text{ROI}}}$ is a linear attenuation coefficient distribution of the normal resolution outside the ROI.

In S202, ROI projection estimation is performed on the detailed-view scanning data to obtain detailed-view projection estimation.

Projection estimation can be performed in the step S202 on the detailed-view scanning data of the ROI obtained in the step S201. For example, estimation data $\hat{\mathbf{g}}^{HR-ROI} \equiv \varphi_1(\mathbf{p}^{HR-ROI})$ of $\mathbf{H}^{HR-ROI}\mu^{ROI}$ can be obtained through a ROI projection estimation network model on the basis of $\mathbf{p}^{HR-ROI}$ obtained in the step S201, where $\varphi_1(g)$ represents an operator of a neural network.

In S203, analytical reconstruction processing is performed on the detailed-view estimation data to obtain first image estimation of the ROI.

In the step S203, reconstruction processing can be performed on the projection data $\hat{\mathbf{g}}^{HR-ROI}$ of the ROI obtained in the step S202. For example, $\hat{\boldsymbol{\mu}}^{ROI} = \left[\mathbf{H}^{HR-ROI}\right]_w^T \mathbf{F}\mathbf{w}\hat{\mathbf{g}}^{HR-ROI}$ can be used, where $\mathbf{w}$ is weighting in a filtered back projection algorithm under fan-beam or cone-beam scanning; $\mathbf{F}$ is filtering; and $\left[\mathbf{H}^{HR-ROI}\right]_w^T$ represents a weighting back projection process under fan-beam or cone-beam scanning, thus obtaining first image estimation $\hat{\boldsymbol{\mu}}^{ROI}$ of the ROI.

In S204, reconstruction processing is performed on the full-view projection data to obtain first full-view image estimation within the ROI of second estimate image data. In the step S204, the full-view scanning data obtained in the step S201 can be reconstructed using a conventional reconstruction method in the art to obtain second image estimation $\mu^{NR}$, and the image estimation may include image estimation $\hat{\mu}^{NR-ROI}$ within the ROI and image estimation $\hat{\mu}^{NR-\overline{ROI}}$ outside the ROI. This step can be carried out using a well-known iteration method in the art or can be carried out through an analytical reconstruction algorithm.

In S205, high-resolution image data of the ROI is determined using an image optimization model according to the first image estimation and the first full-view image estimation.

In the step S205, first image estimation $\hat{\mu}^{ROI}$ of the ROI and first full-view image estimation $\mu^{NR-ROI}$ within the ROI can be input into an image generation algorithm model to obtain a high-quality high-resolution image $\hat{\mu}^{HR-ROI}$ of the ROI.

In addition, in the embodiments of the present disclosure, after the second image estimation is obtained in the step S204, high-resolution projection data of pixels outside the ROI can be calculated: $\hat{\mathbf{g}}^b = \mathbf{H}^{HR-\overline{ROI}}\hat{\mu}^{\overline{ROI}}$, where $\mathbf{H}^{HR-\overline{ROI}}$ is a system matrix corresponding to the high-resolution detector and normal resolution pixels outside the ROI.

In addition, pixel-by-pixel summation can be performed on first high-resolution projection data $\mathbf{g}^a$ inside the ROI and second high-resolution projection data $\mathbf{g}^b$ outside the ROI which are obtained in this way to obtain third high-resolution projection data $\hat{\mathbf{p}} = \mathbf{g}^a + \mathbf{g}^b$ of the ROI. Later, cost function 1 can be defined as a distance between $\hat{\mathbf{p}}$ and $\mathbf{p}^{HR-ROI}$ : $\Phi_1(\hat{\mathbf{p}}, \mathbf{p}^{HR-ROI})$ and cost function 2 can be defined as a distance between $\hat{\mu}^{ROI}$ and $\tilde{\mu}^{ROI}$ : $(\hat{\mu}^{ROI}, \tilde{\mu}^{ROI})$. Therefore, a ROI projection estimation network can be trained using cost function 1 and cost function 2 which are obtained in this way. For example, training can be achieved by minimizing

$$\Phi_1\left(\hat{\tilde{\boldsymbol{\mu}}}^{ROI}, \tilde{\boldsymbol{\mu}}^{ROI}\right) + \lambda\Phi_2\left(\hat{\boldsymbol{p}}, \boldsymbol{p}^{HR-ROI}\right)$$

.

In addition, in the embodiments of the present disclosure, after the high-quality high-resolution image of the ROI is obtained, cost function 3 can also be defined as a distance between $\hat{\mu}^{HR-ROI}$ and $\tilde{\mu}^{ROI}$ : $\Phi_3(\hat{\mu}^{HR-ROI}, \tilde{\mu}^{ROI})$. Therefore, the image generation algorithm model can also be trained using cost function 3. For example, similar to cost functions 1 and 2, the above training can also be performed by minimizing cost function 3.

In addition, in order to acquire a training data set for training, in the embodiments of the present disclosure, training data can also be obtained on the basis of a projection simulation process of detailed-view and full-view scanning modes. For example, high-resolution estimation image training data $\boldsymbol{\mu}_{train}^{HR-ROI}$ of the ROI can be obtained by scanning a preset model body or human body and using the conventional reconstruction method. Of course, in the embodiments of the present disclosure, the high-resolution image training data can also be obtained by a digital model body. Similarly, full-view estimation training data $\boldsymbol{\mu}_{train}^{NR}$ with a normal resolution can be obtained by scanning a preset model body or human body and using a conventional reconstruction method, or the data can be obtained from a published data source. In addition, data augmentation can be performed on the high-resolution image training data and the normal-resolution full-view estimation training data of the ROI that are obtained in this way, for example, by gray-scale transformation, rotation, shifting and affine transformation. Thus, data HR-ROI NR HR-ROI [ $\boldsymbol{p}_{train}^{HR-ROI}$ , $\boldsymbol{p}_{train}^{NR}$ , and $\boldsymbol{\mu}_{train}^{HR-ROI}$ ] is finally formed to form a training data set.

In an actual CT scanning process, the projection data $\mathbf{p}^{HR-ROI}$ obtained by detailed-view scanning and the projection data $\mathbf{p}^{NR}$ obtained by full-view scanning can be used as inputs for the above-mentioned CT data reconstruction method, thus obtaining $\hat{\mu}^{HR-ROI}$ serving as the detailed-view image estimation. Furthermore, $\hat{\mu}^{NR}$ can be used as the full-view image estimation, or $\hat{\mu}^{NR}$ can be used as an output after being further denoised using a conventional denoising method in the art.

Therefore, according to the CT data reconstruction solution provided in the embodiments of the present disclosure, by means of acquiring detailed-view scanning data and full-view scanning data and performing ROI projection estimation on the detailed-view scanning data, high-resolution image estimation of a ROI is obtained; reconstruction processing is performed on the full-view projection data to obtain second image estimation; high-resolution image data of the ROI is determined using an image optimization model according to the first image estimation and the first full-view image estimation, so that a data integrity characteristic of full-view scanning and a high resolution characteristic of detailed-view scanning can be combined to reconstruct a CT image, which not only improves the quality of a reconstructed CT image, but also greatly improves the reconstruction efficiency.

Embodiment III

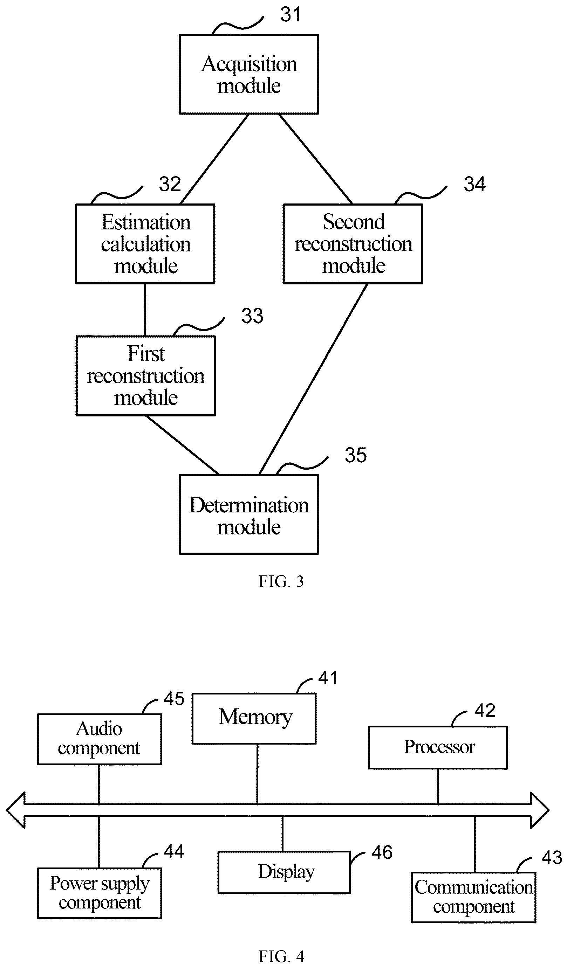

FIG. 3 is a schematic structural diagram of one embodiment of a CT data reconstruction apparatus provided by the present disclosure, which can be configured for executing the steps of the method as shown in FIG. 2. As shown in FIG. 3, the CT data reconstruction apparatus may include: an acquisition module 31, an estimation module 32, a first reconstruction module 33, a second reconstruction module 34 and a determination module 35.

The acquisition module 31 can be configured to acquire detailed-view scanning data and full-view scanning data.

The acquisition module 31 can be configured to respectively acquire detailed-view scanning data and full-view scanning data. For example, in the embodiments of the present disclosure, a high-resolution detector can be used to perform centralized scanning on a ROI. In the embodiments of the present disclosure, a normal-resolution detector can also be used as a full-view detector for larger-range scanning. Therefore, for example, in the scenario as shown in FIG. 1, a scanning beam formed by the normal-resolution detector and an X-ray source and a scanning beam formed by the high-resolution detector respectively achieve full-view scanning and detailed-view scanning. The above method extends in an axial dimension (perpendicular to a two-dimensional plane in the figure) to form a three-dimensional image.

The full-view scanning data is usually based on a low resolution, but its scanning range is wider, so that a complete scanning result can be obtained. The detailed-view scanning data is usually based on a high resolution, but its scanning range is focused, so that a scanning result of a higher resolution can be obtained. Therefore, a data integrity characteristic of full-view scanning and a high resolution characteristic of detailed-view scanning can be combined to reconstruct a CT image, which not only improves the quality of a reconstructed CT image, but also greatly improves the reconstruction efficiency.

In addition, the acquisition module 31 can also first acquire full-view scanning data, and detailed-view scanning data of the ROI, and then perform general data preprocessing on the detailed-view scanning data, such as background removal, air removal and negative logarithm operation, to obtain projection data which is recorded as $\mathbf{p}^{\text{HR-ROI}}$ and can be expressed as:

$$\mathbf{p}^{\text{HR-ROI}} = \mathbf{H}^{\text{HR-ROI}}(\boldsymbol{\mu}^{\text{ROI}} + \boldsymbol{\mu}^{\overline{\text{ROI}}}) + \mathbf{n}^{\text{HR}}$$

where $\boldsymbol{\mu}^{\text{ROI}}$ represents a linear attenuation coefficient distribution inside the ROI;
$\mu^{\overline{\text{ROI}}}$ represents a linear attenuation coefficient distribution of the normal resolution outside the ROI; $\mathbf{H}^{\text{HR-ROI}}$ represents a system matrix of detailed-view scanning; and
$\mathbf{n}^{\text{HR}}$ represents random noise.

Conventional data preprocessing is similarly performed on the full-view scanning data, such as background removal, air removal and negative logarithm operation, thus obtaining projection data which is recorded as $\mathbf{p}^{\text{NR}}$ and can be expressed as:

$$\mathbf{p}^{\text{NR}} = \mathbf{H}^{\text{NR}}(\boldsymbol{\mu}^{\text{NR}}) + \mathbf{n}^{\text{NR}} = \mathbf{H}^{\text{NR}}(\boldsymbol{\mu}^{\text{NR-ROI}} + \boldsymbol{\mu}^{\text{NR-}\overline{\text{ROI}}}) + \mathbf{n}^{\text{NR}}$$

where $\mathbf{H}^{\text{NR}}$ is a system matrix of full-view scanning; $\mathbf{n}^{\text{NR}}$ is random noise; $\boldsymbol{\mu}^{\text{NR}}$ is a linear attenuation coefficient distribution of the normal resolution, which can be divided into two parts: $\boldsymbol{\mu}^{\text{N-ROI}}$ is a linear attenuation coefficient distribution of the normal resolution of the ROI, and $\boldsymbol{\mu}^{\text{N-}\overline{\text{ROI}}}$ is a linear attenuation coefficient distribution of the normal resolution outside the ROI.

The estimation module 32 can be configured to perform ROI projection estimation on the detailed-view scanning data to obtain the estimation of detailed-view projection.

The estimation module 32 can perform projection estimation on the detailed-view scanning data of the ROI obtained by the acquisition module 31. For example, estimation $\hat{\mathbf{g}}^{\text{HR-ROI}} \equiv \varphi_1(\mathbf{p}^{\text{HR-ROI}})$ of $\mathbf{H}^{\text{HR-ROI}}\boldsymbol{\mu}^{\text{ROI}}$ can be obtained through a ROI projection estimation network model on the basis of $\mathbf{p}^{\text{HR-ROI}}$ obtained by the acquisition module 31, where $\varphi_1$

(g) represents an operator of a neural network.

The first reconstruction module 33 can be configured to perform analytical reconstruction on the estimation of detailed-view projection to obtain first image estimation of a ROI.

The first reconstruction module 33 can perform reconstruction on the projection data $\hat{g}^{HR-ROI}$ of the ROI obtained by the estimation module 32. For example, $\hat{\mu}^{ROI} = \left[ \mathbf{H}^{HR-ROI} \right]_w^T \mathbf{Fw}\hat{g}^{HR-ROI}$ can be used, where $\mathbf{w}$ is weighting in a filtered back projection algorithm under fan-beam or cone-beam scanning; $\mathbf{F}$ is filtering; and $\left[ \mathbf{H}^{HR-ROI} \right]_w^T$ represents a weighting back projection process under fan-beam or cone-beam scanning, thus obtaining first image estimation $\hat{\mu}^{ROI}$ of the ROI.

The second reconstruction module 34 can be configured to perform reconstruction processing on the full-view projection data to obtain second image estimation.

The second reconstruction module 34 can reconstruct the full-view projection data obtained by the acquisition module 31 using a conventional reconstruction method in the art to obtain second image estimation $\mu^{NR}$, and the image estimation may include image estimation $\hat{\mu}^{NR-ROI}$ within the ROI and image estimation $\hat{\mu}^{NR-\overline{ROI}}$ outside the ROI. This step can be carried out using a well-known iteration method in the art or can be carried out through an analytical reconstruction algorithm.

The determination module 35 can be configured to determine high-resolution image data of the ROI using an image optimization model according to the first image estimation and the first full-view image estimation.

The determination module 35 can input first image estimation $\hat{\mu}^{ROI}$ of the ROI and first full-view image estimation $\mu^{NR-ROI}$ within the ROI into an image generation algorithm model to obtain a high-quality high-resolution image $\hat{\mu}^{HR-ROI}$ of the ROI. In addition, in the embodiments of the present disclosure, after the second reconstruction module 34 obtains the second image estimation, high-resolution projection data of pixels outside the ROI can be further calculated: $g^b = \mathbf{H}^{HR-\overline{ROI}}\hat{\mu}^{\overline{ROI}}$, where $\mathbf{H}^{HR-ROI}$ is a system matrix corresponding to the high-resolution detector and normal resolution pixels outside the ROI.

In addition, pixel-by-pixel summation can be performed on first high-resolution projection data $g^a$ inside the ROI and second high-resolution projection data $g^b$ outside the ROI which are obtained in this way to obtain third high-resolution projection data $\hat{p} = g^a + g^b$ of the ROI. Later, cost function 1 can be defined as a distance between $\hat{p}$ and $p^{HR-ROI} : \Phi_1(\hat{p}, p^{HR-ROI})$ and cost function 2 can be defined as a distance between $\hat{\mu}^{ROI}$ and $\tilde{\mu}^{ROI} : \Phi_2(\hat{\mu}^{ROI}, \tilde{\mu}^{ROI})$. Therefore, a ROI projection estimation network can be trained using cost function 1 and cost function 2 which are obtained in this way. For example, training can be achieved by minimizing

$$\Phi_1\left(\hat{\boldsymbol{\mu}}^{ROI}, \tilde{\boldsymbol{\mu}}^{ROI}\right) + \lambda\Phi_2\left(\hat{\boldsymbol{p}}, \boldsymbol{p}^{HR-ROI}\right)$$

.

In addition, in the embodiments of the present disclosure, after the high-quality high-resolution image of the ROI is obtained, cost function 3 can also be defined as a distance between $\hat{\mu}^{HR-ROI}$ and $\tilde{\mu}^{ROI} : \Phi_3(\hat{\mu}^{HR-ROI}, \tilde{\mu}^{ROI})$. Therefore, the image optimization model can also be trained using cost function 3. For example, similar to cost functions 1 and 2, the above training can also be performed by minimizing cost function 3.

In addition, in order to acquire a training data set for training, in the embodiments of the present disclosure, training data can also be obtained on the basis of a projection simulation process of detailed-view and full-view scanning modes. For example, high-resolution estimation image training data $\mu_{train}^{HR-ROI}$ of the ROI can be obtained by scanning a preset model body or human body and using the conventional reconstruction method. Of course, in the embodiments of the present disclosure, the high-resolution image training data can also be obtained by a digital model body. Similarly, full-view estimation training data $\mu_{train}^{NR}$ with a normal resolution can be obtained by scanning a preset model body or human body and using a conventional reconstruction method, or the data can be obtained from a published data source. In addition, data augmentation can be performed on the high-resolution image training data and the normal-resolution full-view estimation training data of the ROI that are obtained in this way, for example, by gray-scale transformation, rotation, shifting and affine transformation. Thus, data [ $\mathbf{p}_{train}^{HR-ROI}$ , $\mathbf{p}_{train}^{NR}$ and $\mu_{train}^{HR-ROI}$ ] is finally formed to form a training data set.

In an actual CT scanning process, the projection data $\mathbf{p}^{HR-ROI}$ obtained by detailed-view scanning and the projection data $\mathbf{p}^{NR}$ obtained by full-view scanning can be used as inputs for the above-mentioned CT data reconstruction method, thus obtaining $\hat{\mu}^{HR-ROI}$ serving as the detailed-view image estimation. Furthermore, $\hat{\mu}^{NR}$ can be used as the full-view image estimation, or $\hat{\mu}^{NR}$ can be used as an output after being further denoised using a conventional denoising method in the art.

Therefore, according to the CT data reconstruction solution provided in the embodiments of the present disclosure, by means of acquiring detailed-view scanning data and full-view scanning data and performing ROI projection estimation on the detailed-view scanning data, high-resolution image estimation of a ROI is obtained; reconstruction processing is performed on the full-view projection data to obtain second image estimation; high-resolution image data of the ROI is determined using an image optimization mode according to the first image estimation and the first full-view image estimation, so that a data integrity characteristic of full-view scanning and a high resolution characteristic of detailed-view scanning can be combined to reconstruct a CT image, which not only improves the quality of a reconstructed CT image, but also greatly improves the reconstruction efficiency.

Embodiment IV

The internal functions and structures of the CT data reconstruction apparatus are described above. The apparatus can be implemented as an electronic device. FIG. 4 is a schematic structural diagram of an electronic device embodiment provided by the present disclosure. As shown in FIG. 4, the electronic device includes a memory 41 and a processor 42.

The memory 41 is configured for storing a program. In addition to the above-mentioned program, the memory 41 may also be configured for storing various other data to support operations on the electronic device. Examples of such data include instructions for any application program or method operated on the electronic device, contact data, phone book data, messages, pictures, videos, and the like.

The memory 41 may be implemented by any type of volatile or non-volatile storage devices or a combination thereof, such as Static Random Access Memory (SRAM), an Electrically Erasable Programmable Read-Only Memory (EEPROM), a Programming Read-Only Memory (EPROM), a Programmable Read-Only Memory (PROM), a Read-Only Memory (ROM), a magnetic memory, a flash memory, a magnetic disk or an optical disk.

The processor 42 is not limited to a Central Processing Unit (CPU), but may also be a Graphics Processing Unit (GPU), a Field Programmable Gate Array (FPGA), an Embedded Neural Network Processing Unit (NPU), or an Artificial Intelligence (AI) chip, and other processing chips. The processor 42 is coupled with the memory 41 and executes the program stored in the memory 41. The program, when run, implements the CT data reconstruction method of the above-mentioned embodiment II.

Further, as shown in FIG. 4, the electronic device may further include: a communication component 43, a power supply component 44, an audio component 45, a display 46 and other components. Only some components are schematically shown in FIG. 4, which does not mean that the electronic device only includes the components shown in FIG. 4.

The communication component 43 is configured for facilitating wired or wireless communications between the electronic device and other devices. The electronic device may access a wireless network based on a communication standard, such as Wi-Fi, 3G, 4G or 5G, or a combination thereof. In one exemplary example, the communication component 43 receives a broadcast signal or broadcast related information from an external broadcast management system via a broadcast channel. In one exemplary embodiment, the communication component 43 further includes a Near Field Communication (NFC) module to facilitate short-range communications. For example, the NFC module may be implemented based on a Radio Frequency Identification (RFID) technology, an Infrared Data Association (IrDA), an Ultra-Wide Band (UWB) technology, a Bluetooth (BT) technology and other technologies.

The power supply component 44 provides power to various components of the electronic device. The power supply component 44 may include a power management system, one or more power supplies, and other components associated with generation, management, and distribution of power for the electronic device.

The audio component 45 is configured for outputting and/or inputting audio signals. For example, the audio component 45 includes a microphone (MIC). The microphone is configured for receiving an external audio signal when the electronic device is in an operation mode, such as a calling mode, a recording mode, and a voice recognition mode. The received audio signal may be further stored in the memory 41 or transmitted via the communication component 43. In some examples, the audio component 45 further includes a speaker configured for outputting audio signals.

The display 46 includes a screen which may include a Liquid Crystal Display (LCD) and a Touch Panel (TP). If it includes the TP, the screen may be implemented as a touch screen to receive an input signal from a user. The TP includes one or more touch sensors to sense touch, swipe, and gestures on the TP. The touch sensor may not only detect a boundary of a touch or swipe action, but also detect duration and pressure related to the touch or swipe operation.

Those of ordinary skill in the art can understand that all or part of the steps in the foregoing method embodiments can be implemented by a program instruction related hardware. The aforementioned program can be stored in one computer-readable storage medium. The program, when executed, executes the steps of the foregoing method embodiments; and the foregoing storage medium includes: a ROM, a RAM, a magnetic disk, or an optical disk and other media that can store program codes.

**Claims**

1. A computerized tomography (CT) data reconstruction method, comprising:

   acquiring detailed-view scanning data and full-view scanning data;
   through a ROI projection estimation neural network model trained using a cost function, performing ROI projection estimation on the detailed-view scanning data to obtain detailed-view estimation data;
   performing analytical reconstruction processing on the detailed-view estimation data to obtain first image estimation of a ROI;
   performing reconstruction processing on the full-view projection data, to obtain first full-view image estimation within the ROI of second estimate image data; and
   determining high-resolution image data of the ROI using an image optimization model trained using the cost function,
   according to the first image estimation and the first full-view image estimation.

2. The CT reconstruction method according to claim 1, further comprising:

   calculating first high-resolution projection data within the ROI according to the first image estimation;
   calculating second high-resolution projection data beyond the ROI according to the second image estimation; and
   determining third high-definition projection data of the ROI according to the first high-resolution projection data and the second high-resolution projection data.

3. The CT reconstruction method according to claim 2, wherein a projection estimation model is used for the projection estimation, and the method further comprises:

   optimizing the projection estimation model using a first cost function and a second cost function,
   wherein the first cost function is a norm distance between the third high-resolution projection data and the detailed-view projection data, and the second cost function is a norm distance between the first image estimation and the second image estimation.

4. The CT reconstruction method according to claim 3, further comprising:
   calculating a third cost function according to the high-resolution image data; and
   optimizing the image optimization model using the third cost function on the basis of the projection estimation model.

5. The CT reconstruction method according to claim 2, wherein determining third high-definition projection data of the ROI according to the first high-resolution projection data and the second high-resolution projection data comprises:
   obtaining the third high-resolution projection data of the ROI by means of performing pixel-by-pixel summation processing on the first high-resolution projection data and the second high-resolution projection data.

6. The CT reconstruction method according to claim 1, further comprising:

   acquiring full-view data and detailed-view data of a predetermined reference object for training;
   obtaining training data of full-view estimation and detailed-view estimation according to the full-view scanning data and the detailed-view scanning data;
   performing data augmentation processing on the training data of full-view estimation and detailed-view estimation to obtain augmented data of full-view image estimation and detailed-view image estimation;
   performing fusion processing on the augmented data of full-view image estimation with the augmented data of detailed-view image estimation to obtain fused image data for training;
   respectively performing detailed-view and full-view simulation on the fused image data for training to obtain training data of full-view CT image and detailed-view CT image; and
   performing training on a neural network model using the training data of full-view CT image and the detailed-view CT image to obtain a first neural network model.

7. The CT reconstruction method according to claim 1, further comprising:

   calculating a third cost function according to the high-resolution image data; and
   performing optimization on the image optimization model using the third cost function.

8. A CT reconstruction apparatus, comprising:

an acquisition module configured to acquire detailed-view scanning data and full-view scanning data;
an estimation module configured to through a ROI projection estimation neural network model trained using a cost function perform ROI projection estimation on the detailed-view projection data to obtain detailed-view estimation data;
a first reconstruction module configured to perform analytical reconstruction processing on the detailed-view estimation data to obtain first image estimation of a ROI;
a second reconstruction module configured to perform reconstruction processing on the full-view projection data to obtain first full-view image estimation within the ROI of second image estimate; and
a determination module configured to determine high-resolution image data of the ROI using an image optimization model trained using the cost function, according to the first image estimation and the first full-view image estimation.

9. An electronic device, comprising:

a memory configured for storing a program; and
a processor configured for running the program stored in the memory to implement the CT reconstruction method according to any one of claims 1 to 7.

10. A computer-readable storage medium which stores a computer program executed by a processor, wherein the program, when executed by the processor, implements the CT reconstruction method according to any one of claims 1 to 7.

**Patentansprüche**

1. Verfahren zur Rekonstruktion von Computertomographie (CT)-Daten, umfassend:

Erfassung von Detailansicht-Scandaten und Vollansicht-Scandaten
durch ein neuronales Netzwerkmodell zur ROI-Projektionsschätzung, das unter Verwendung einer Kostenfunktion trainiert wurde,
Durchführung einer ROI-Projektionsschätzung für die Detailansicht-Scandaten, um Detailansicht-Schätzungsdaten zu erhalten;
Durchführung einer analytischen Rekonstruktionsverarbeitung der detaillierten Ansichtsschätzungsdaten, um die erste Bildschätzung eines ROI zu erhalten;
Durchführung einer Rekonstruktionsverarbeitung der Vollansichtsprojektionsdaten, um die erste Vollansichtsbildschätzung innerhalb des ROI der zweiten Schätzungsbilddaten zu erhalten; und
Bestimmung hochauflösender Bilddaten des ROI unter Verwendung eines Bildoptimierungsmodells, das unter Verwendung der Kostenfunktion gemäß der ersten Bildschätzung und der ersten Vollansichtsbildschätzung trainiert wurde.

2. Das CT-Rekonstruktionsverfahren gemäß dem Anspruch 1, das ferner umfasst:

Berechnung erster hochauflösender Projektionsdaten innerhalb des ROI gemäß der ersten Bildschätzung,
Berechnung zweiter hochauflösender Projektionsdaten außerhalb des ROI gemäß der zweiten Bildschätzung; und
Bestimmung dritter hochauflösender Projektionsdaten des ROI gemäß den ersten hochauflösenden Projektionsdaten und den zweiten hochauflösenden Projektionsdaten.

3. Das CT-Rekonstruktionsverfahren gemäß dem Anspruch 2, wobei ein Projektionsschätzungsmodell für die Projektionsschätzung eingesetzt wird und das Verfahren ferner umfasst:

Optimierung des Projektionsschätzungsmodells unter Verwendung der ersten Kostenfunktion und der zweiten Kostenfunktion,
wobei die erste Kostenfunktion ein Normabstand zwischen den dritten hochauflösenden Projektionsdaten und den detaillierten Projektionsdaten ist und die zweite Kostenfunktion ein Normabstand zwischen der ersten Bildschätzung und der zweiten Bildschätzung ist.

4. Das CT-Rekonstruktionsverfahren gemäß dem Anspruch 3, das ferner umfasst:
Berechnung der dritten Kostenfunktion gemäß den hochauflösenden Bilddaten; und Optimierung des Bildoptimierungsmodells unter Verwendung der dritten Kostenfunktion auf der Grundlage des Projektionsschätzungsmodells.

5. Das CT-Rekonstruktionsverfahren gemäß dem Anspruch 2, wobei die Bestimmung der dritten hochauflösenden Projektionsdaten des ROI gemäß den ersten hochauflösenden Projektionsdaten und den zweiten hochauflösenden Projektionsdaten umfasst:
Beschaffung der dritten hochauflösenden Projektionsdaten des ROI durch Durchführung einer pixelweisen Summierungsverarbeitung der ersten hochauflösenden Projektionsdaten und der zweiten hochauflösenden Projektionsdaten.

6. Das CT-Rekonstruktionsverfahren gemäß dem Anspruch 1, das ferner umfasst:

Erfassung von Vollansichtsdaten und Detailansichtsdaten eines vorbestimmten Referenzobjekts zum Trainieren;
Beschaffung von Trainingsdaten für die Vollbildschätzung und die Detailbildschätzung gemäß den Vollbild-Scan-Daten und den Detailbild-Scan-Daten,
Durchführung einer Datenvergrößerungsverarbeitung an den Trainingsdaten für die Vollbildschätzung und die Detailbildschätzung, um vergrößerte Daten für die Vollbildbildschätzung und die Detailbildbildschätzung zu erhalten,
Durchführung einer Fusionsverarbeitung an den vergrößerten Daten für die Vollbildbildschätzung mit den vergrößerten Daten für die Detailbildbildschätzung, um fusionierte Bilddaten für das Training zu erhalten;
entsprechende Durchführung einer Detailansicht- und Vollbildsimulation an den fusionierten Bilddaten für das Training, um Trainingsdaten für Vollbild-CT-Bilder und Detailansicht-CT-Bilder zu erhalten; und
Durchführung eines Trainings an einem neuronalen Netzwerkmodell unter Verwendung der Trainingsdaten für Vollbild-CT-Bilder und Detailansicht-CT-Bilder, um ein erstes neuronales Netzwerkmodell zu erhalten.

7. Das CT-Rekonstruktionsverfahren gemäß dem Anspruch 1, das außerdem Folgendes umfasst:
Berechnung der dritten Kostenfunktion gemäß den hochauflösenden Bilddaten; und Durchführung einer Optimierung des Bildoptimierungsmodells unter Anwendung der dritten Kostenfunktion.

8. Ein CT-Rekonstruktionsgerät, umfassend:

ein Erfassungsmodul, das zum Erfassen von Detailansicht-Scandaten und Vollansicht-Scandaten konfiguriert ist;
ein Schätzmodul, das zum Durchführen einer ROI-Projektionsschätzung anhand der Detailansicht-Projektionsdaten mittels eines unter Verwendung einer Kostenfunktion trainierten neuronalen Netzwerkmodells für die ROI-Projektionsschätzung konfiguriert ist, um Detailansicht-Schätzdaten zu erhalten;
das erste Rekonstruktionsmodul, das zum Durchführen einer analytischen Rekonstruktionsverarbeitung der Detailansicht-Schätzdaten konfiguriert ist, um die erste Bildschätzung eines ROI zu erhalten;
das zweite Rekonstruktionsmodul, das so konfiguriert ist, dass es eine Rekonstruktionsverarbeitung an den Vollbildprojektionsdaten durchführt, um die erste Vollbildbildschätzung innerhalb des ROI einer zweiten Bildschätzung zu erhalten; und
ein Bestimmungsmodul, das so konfiguriert ist, dass es hochauflösende Bilddaten des ROI unter Verwendung eines Bildoptimierungsmodells bestimmt, das unter Verwendung der Kostenfunktion gemäß der ersten Bildschätzung und der ersten Vollbildbildschätzung trainiert wurde.

9. Ein elektronisches Gerät, das Folgendes umfasst:

einen Speicher, der zum Speichern eines Programms konfiguriert ist;
und einen Prozessor, der zum Ausführen des im Speicher gespeicherten Programms konfiguriert ist, um das CT-Rekonstruktionsverfahren gemäß einem der Ansprüche 1 bis 7 zu implementieren.

10. Ein computerlesbares Speichermedium, das ein von einem Prozessor ausgeführtes Computerprogramm speichert, wobei das Programm, wenn es vom Prozessor ausgeführt wird, das CT-Rekonstruktionsverfahren gemäß einem der Ansprüche 1 bis 7 implementiert.

**Revendications**

1. Procédé de reconstruction de données de tomodensitométrie (CT) assisté par ordinateur, comprenant :

   l'acquisition de données de balayage en vue détaillée et de données de balayage en vue complète ;
   au moyen d'un modèle de réseau neuronal d'estimation de projection de région d'intérêt (ROI) entraîné à l'aide d'une fonction de coût, la réalisation d'une estimation de projection de la ROI sur les données de balayage en vue détaillée afin d'obtenir des données d'estimation en vue détaillée ;
   la mise en œuvre d'un traitement de reconstruction analytique sur les données d'estimation en vue détaillée pour obtenir une première estimation d'image d'une ROI ;
   la mise en œuvre d'un traitement de reconstruction sur les données de projection en vue complète afin d'obtenir une première estimation d'image en vue complète à l'intérieur de la ROI de données d'image de seconde estimation ; et
   la détermination de données d'image à haute résolution de la ROI au moyen d'un modèle d'optimisation d'image, entraîné à l'aide de ladite fonction de coût, en fonction de la première estimation d'image et de la première estimation d'image en vue complète.

2. Procédé de reconstruction CT selon la revendication 1, comprenant en outre :

   le calcul de premières données de projection à haute résolution à l'intérieur de la ROI en fonction de la première estimation d'image ;
   le calcul de secondes données de projection à haute résolution au-delà de la ROI en fonction de la seconde estimation d'image ; et
   la détermination de troisièmes données de projection en haute définition de la ROI en fonction desdites premières et secondes données de projection à haute résolution.

3. Procédé de reconstruction CT selon la revendication 2, dans lequel un modèle d'estimation de projection est utilisé pour l'estimation de projection, et le procédé comprend en outre :

   l'optimisation du modèle d'estimation de projection au moyen d'une première fonction de coût et d'une seconde fonction de coût,
   dans lequel la première fonction de coût est une distance de norme entre les troisièmes données de projection à haute résolution et les données de projection en vue détaillée, et la seconde fonction de coût est une distance de norme entre la première estimation d'image et la seconde estimation d'image.

4. Procédé de reconstruction CT selon la revendication 3, comprenant en outre :

   le calcul d'une troisième fonction de coût en fonction des données d'image à haute résolution ; et
   l'optimisation du modèle d'optimisation d'image au moyen de ladite troisième fonction de coût sur la base du modèle d'estimation de projection.

5. Procédé de reconstruction CT selon la revendication 2, dans lequel la détermination des troisièmes données de projection en haute définition de la ROI en fonction des premières et secondes données de projection à haute résolution comprend :
   l'obtention des troisièmes données de projection à haute résolution de la ROI par un traitement de sommation pixel par pixel desdites premières et secondes données de projection à haute résolution.

6. Procédé de reconstruction CT selon la revendication 1, comprenant en outre :

   l'acquisition de données en vue complète et en vue détaillée d'un objet de référence prédéterminé pour l'entraînement ;
   l'obtention de données d'entraînement d'estimation en vue complète et d'estimation en vue détaillée en fonction des données de balayage en vue complète et des données de balayage en vue détaillée ;
   la mise en œuvre d'un traitement d'augmentation de données sur les données d'entraînement d'estimation en vue complète et d'estimation en vue détaillée pour obtenir des données augmentées d'estimation d'image en vue complète et d'estimation d'image en vue détaillée ;
   la mise en œuvre d'un traitement de fusion sur les données augmentées d'estimation d'image en vue complète avec les données augmentées d'estimation d'image en vue détaillée pour obtenir des données d'image fusionnées pour l'entraînement ;

la réalisation de simulations respectivement en vue détaillée et en vue complète sur les données d'image fusionnées pour l'entraînement afin d'obtenir des données d'entraînement d'image CT en vue complète et en vue détaillée ; et

l'entraînement d'un modèle de réseau neuronal au moyen des données d'entraînement d'image CT en vue complète et en vue détaillée afin d'obtenir un premier modèle de réseau neuronal.

**7.** Procédé de reconstruction CT selon la revendication 1, comprenant en outre :

le calcul d'une troisième fonction de coût en fonction des données d'image à haute résolution ; et

l'optimisation du modèle d'optimisation d'image au moyen de ladite troisième fonction de coût.

**8.** Appareil de reconstruction CT, comprenant :

un module d'acquisition configuré pour acquérir des données de balayage en vue détaillée et des données de balayage en vue complète ;

un module d'estimation configuré pour réaliser, au moyen d'un modèle de réseau neuronal d'estimation de projection de ROI entraîné à l'aide d'une fonction de coût, une estimation de projection de ROI sur les données de projection en vue détaillée afin d'obtenir des données d'estimation en vue détaillée ;

un premier module de reconstruction configuré pour réaliser un traitement de reconstruction analytique sur les données d'estimation en vue détaillée afin d'obtenir une première estimation d'image d'une ROI ;

un second module de reconstruction configuré pour réaliser un traitement de reconstruction sur les données de projection en vue complète afin d'obtenir une première estimation d'image en vue complète à l'intérieur de la ROI d'une seconde estimation d'image ; et

un module de détermination configuré pour déterminer des données d'image à haute résolution de la ROI au moyen d'un modèle d'optimisation d'image entraîné à l'aide de ladite fonction de coût, en fonction de la première estimation d'image et de la première estimation d'image en vue complète.

**9.** Dispositif électronique, comprenant :

une mémoire configurée pour stocker un programme ; et

un processeur configuré pour exécuter le programme stocké dans la mémoire afin de mettre en œuvre le procédé de reconstruction CT selon l'une quelconque des revendications 1 à 7.

**10.** Support d'enregistrement lisible par ordinateur, stockant un programme informatique exécuté par un processeur, ledit programme, lorsqu'il est exécuté par le processeur, met en œuvre le procédé de reconstruction CT selon l'une quelconque des revendications 1 à 7.

X-ray source

FIG. 1

| Acquire detailed-view scanning data and full-view scanning data | 201 |

204

| Perform reconstruction processing on the full-view projection data to obtain first full-view image estimation within the ROI of second estimate image data |

| Perform ROI projection estimation on the detailed-view scanning data to obtain detailed-view projection estimation | 202 |

| Perform analytical reconstruction processing on the detailed-view estimation data to obtain first image estimation of the ROI | 203 |

| Determine high-resolution image data of the ROI using an image optimization model according to the first image estimation and the first full-view image estimation | 205 |

FIG. 2

31

Acquisition
module

32

Estimation
calculation
module

34

Second
reconstruction
module

33

First
reconstruction
module

35

Determination
module

FIG. 3

45

Audio
component

41

Memory

42

Processor

44

Power supply
component

46

Display

43

Communication
component

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021007694 A1